# EUROPEAN PATENT APPLICATION

(11) **EP 1 681 828 A1**
(43) Date of publication of application: **19.07.2006**
(21) Application number: 06250138.2
(22) Date of filing: 11.01.2006
(51) Int. Cl.: H04L 29/06, G06F 21/00

(54) **An access information relay device, a network device, an access information managing device, a resource managing device and an access control system**

(30) Priority: 11.01.2005 JP 2005004409; 02.05.2005 JP 2005134363
(71) Applicant: NTT DoCoMo INC., Chiyoda-ku Tokyo 100-6150 (JP)
(72) Inventor: Omae, Koji, NTT DoCoMo, Inc., DPI, Tokyo 100-6150 (JP); Matsumoto, Yoichi, NTT DoCoMo, Inc., DPI, Tokyo 100-6150 (JP)
(74) Representative: Rees, Alexander Ellison

(57) **Abstract**

An access information managing device 110, an access information relay device 120, a network device 130, a resource managing device 150, and an access control system are disclosed, whereby access information of each resource is acquired and transmitted to an accessing party.

The access control system includes
the access information managing device that includes an access information generating unit 116 for generating access information according to a request for information for accessing resources, and for transmitting the generated access information,
the access information relay device that includes an access information acquiring unit 122 for acquiring access information, and a communicating unit 126 for transmitting the access information to the accessing party,
the network device that includes an access control unit 132 for accessing the resources based on the access information, and
the resource managing device that includes a distributing unit 158 for distributing the resources based on the provided access information.

## Description

### BACKGROUND OF THE INVENTION

### 1. Field of the Invention

The present invention relates to an access information relay device, a network device, an access information managing device, a resource managing device, and an access control system for managing access rights to resources using a cellular mobile station.

### 2. Description of the Related Art

In order for a network device to access a content server in a network and acquire the contents, it is necessary to provide a keyboard, a display, etc., for a user to input access information to the network device. For this reason, it is difficult to miniaturize the network device.

In the case of a small device (network device) that has a limited keyboard and display, inputting the access information is difficult or impractical, and accordingly, in order to save contents in the small device, the contents beforehand saved in a computer are transferred by connecting the small device to the computer.

Here, as far as the applicant hereto is aware, there is no reference available concerning the technology of saving contents in the small device as described above at the time of this patent application.

Further, the applicant has not been able to find a preceding (related art) technical reference relevant to the present invention by the time of submitting this patent application; therefore, preceding technical document information is not presented.

### [Description of the Invention]

### [Problem(s) to be solved by the Invention]

The following problems are present in the background technology described above.

According to the method of saving contents in the small device by first saving the contents in the computer and then transferring the contents to the small device, the contents have to be transferred twice, namely from the content server to the computer, and then to the device. This process takes a long time especially when the volume of the contents is great, which is the problem to solve.

### SUMMARY OF THE INVENTION

In order to solve the problem, according to a preferred embodiment of the present invention, an access information relay device, a network device, an access information managing device, a resource managing device, and an access control system are provided, thereby access information for each resource is acquired and transmitted to an accessing party in which requested resources are to be finally stored.

An embodiment of the present invention provides an access information relay device, a network device, an access information managing device, a resource managing device, and an access control system that substantially obviate one or more of the problems caused by the limitations and disadvantages discussed above.

Features of the present invention are set forth in the description that follows, and in part will become apparent from the description and the accompanying drawings, or may be learned by practice of the invention according to the teachings provided in the description. Problem solutions provided by an embodiment of the present invention will be realized and attained by an access information relay device, a network device, an access information managing device, a resource managing device, and an access control system particularly pointed out in the specification in such full, clear, concise, and exact terms as to enable a person having ordinary skill in the art to practice the invention.

To achieve these solutions and in accordance with the purpose of the invention, as embodied and broadly described herein, an embodiment of the invention provides an access information relay device, a network device, an access information managing device, a resource managing device, and an access control system as follows.

### [Means for solving the Problem]

The access information relay device according to an embodiment of the present invention includes an access information acquiring unit for acquiring access information that consists of information for accessing resources and a key for downloading the resources, and a communicating unit for transmitting the access information to at least one of another access information relay device and an accessing party.

By the arrangement as described above, the access information for the resources on the network can be acquired, and the acquired access information can be transmitted to the accessing party.

Further, the network device of the present invention includes a storage unit for storing the access information that consists of the information for accessing the resources and the key for downloading the resources, an access unit for accessing the resources based on the access information, and a decrypting unit for decoding the resources that are encrypted by the key.

By structuring as described above, the access to the resources is attained.

Further, the access information managing device of the present invention includes
a storage unit for storing at least one of the information for accessing the resources and information that indicates permission/denial of access to the resources,
an access information generating unit for generating the access information that consists of information for accessing the resources and the key for downloading the resources according to a distribution request for the information for accessing the resources, and
a transmitting unit for transmitting the generated access information.

By structuring as described above, the access information for the resources that are available on the network can be managed.

Further, the resource managing device of the present invention includes
a storage unit for storing the resources,
an encrypting unit for encrypting the resources for distribution based on the access information that is provided, and
a distributing unit for distributing the encrypted resources.

By structuring as described above, the resources can be distributed based on the access information.

Further, the access control system of the present invention includes
a storage unit for storing at least one of the information for accessing the resources and the information that indicates one of access permission and access denial to the resources,
an access information generating unit for generating the access information that consists of information for accessing the resources and a key for downloading the resources according to a distribution request of the information for accessing the resources, and
a communicating unit for transmitting the access information to the accessing party;
wherein the accessing party includes
a storage unit for storing the access information that is received,
an accessing unit for accessing the resources based on the access information, and
a decrypting unit for decrypting the encrypted resources; and
the resource managing device for managing the resources includes
a storage unit for storing the resources,
an encrypting unit for encrypting the resources for distribution based on the access information provided by the access information managing device, and
a distributing unit for distributing the encrypted resources.

By structuring as described above, the access information of each resource in the network can be acquired, and the acquired access information can be transmitted to the accessing party. Further, the accessing party, for example, a network device, can actually access the resources.

### [Effect of the Invention]

The embodiment of the present invention realizes the access information relay device, the network device, the access information managing device, the resource managing device, and the access control system for acquiring the access information of each resource and for transmitting the access information to the accessing party.

### BRIEF DESCRIPTION OF THE DRAWINGS

Fig. 1 is a schematic diagram showing a structure of an access control system concerning a first embodiment of the present invention;
Fig. 2 is a block diagram of an access information managing device according to the first embodiment of the present invention;
Fig. 3 is a block diagram of an access information relay device according to the first embodiment of the present invention;
Fig. 4 is a block diagram of a network device according to the first embodiment of the present invention;
Fig. 5 is a block diagram of a resource managing device according to the first embodiment of the present invention;
Fig. 6 is a schematic diagram for explaining operations of the access control system according to the first embodiment of the present invention;
Fig. 7 is a sequence diagram of operations of the access control system according to the first embodiment of the present invention;
Fig. 8 is a schematic diagram for explaining operations of the access control system according to the first embodiment of the present invention;
Fig. 9 is a table showing an access ID list according to the first embodiment of the present invention;
Fig. 10 is a schematic diagram showing a structure of the access control system according to the second embodiment of the present invention;
Fig. 11 is a block diagram of the resource managing device according to the second embodiment of the present invention;
Fig. 12 is a block diagram of the network device according to the second embodiment of the present invention;
Fig. 13 is a schematic diagram showing a structure of the access control system according to the third embodiment of the present invention;
Fig. 14 is a block diagram of the resource managing device according to the third embodiment of the present invention;
Fig. 15 is a block diagram of the network device according to the third embodiment of the present invention;
Fig. 16 is a sequence diagram of operations of the access control system according to the third embodiment of the present invention.

### DESCRIPTION OF THE PREFERRED EMBODIMENTS

In the following, embodiments of the present invention are described with reference to the accompanying drawings.

In the following, functional units having the same function are given the same reference number, and descriptions thereof are not repeated.

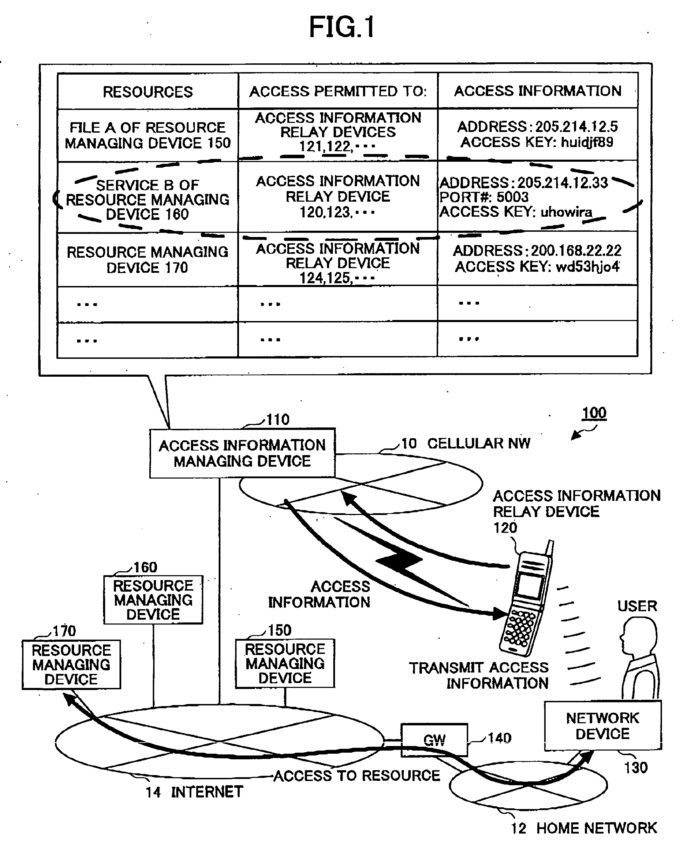

An access control system 100 according to the first embodiment of the present invention is described with reference to Fig. 1.

The access control system 100 includes
an access information managing device (node) 110,
an access information relay device (node) 120 that is connected to the access information managing device 110 through a communication network, for example, a cellular network (cellular NW) 10,
a network device 130 that is connected to the access information relay device 120,
a gateway GW 140 that is connected to the network device 130 through a communication network, for example, a home network 12,
resource managing devices (nodes) 150, 160, and 170 that are connected to the gateway GW 140 through a communication network 14, for example, the Internet 14. Further, the access information managing device 110 is connected to the communication network 14.

According to the access control system 100 of the first embodiment, a mobile station 120 serves as the access information relay device 120, acquires access information from the access information managing device 110 that stores access information available on the network, and transmits the acquired access information to the network device 130 that is the accessing party in which requested resources are finally stored. Then, the network device 130 accesses the resources based on the received access information.

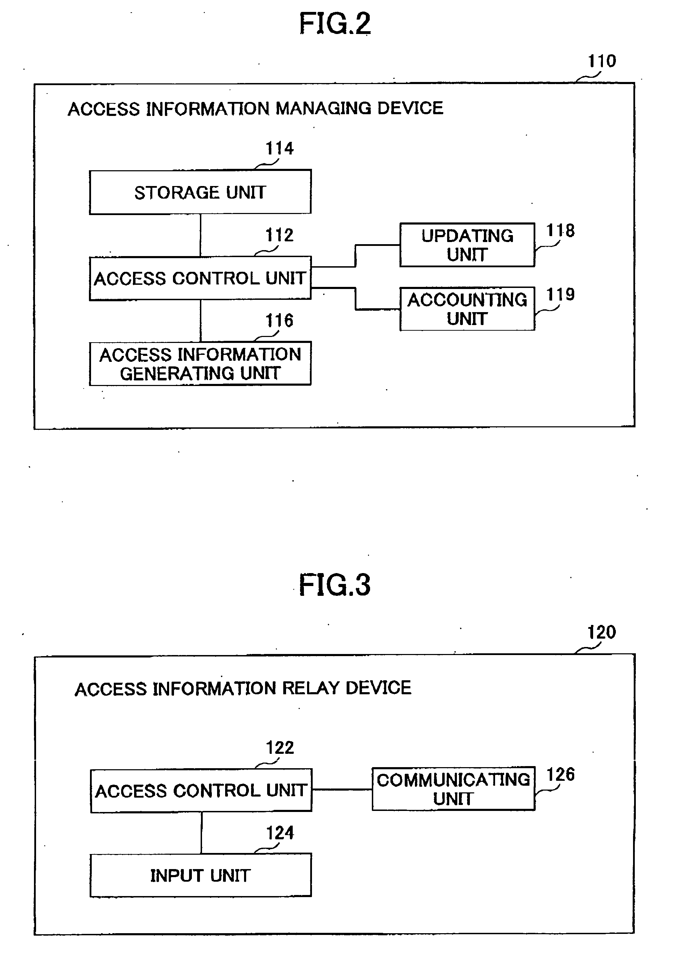

Next, the access information managing device 110, the access information relay device 120, the network device 130, and the resource managing devices 150, 160, and 170 are described with reference to Figs. 2 through 5, respectively.

The access information managing device 110 is described with reference to Fig. 2.

The access information managing device 110 includes an access control unit 112 for determining presence of an access right, a storage unit 114 connected to the access control unit 112, an access information generating unit 116 for generating and transmitting access information, an updating unit 118, and an accounting unit 119.

The access control unit 112 is for controlling access to the access information relay device 120, and the resource managing devices 150, 160, and 170. For example, when the access information relay device 120 requests for access information that consists of information for accessing certain resources and a download key (thereby, secrecy of the resources may be canceled, or decrypted) for downloading, the access control unit 112 determines whether the access information relay device 120 has an access right with reference to at least one of information for accessing resources available on the network and information that indicates permission or denial to access the resources that are stored by the storage unit 114 as described below. If there is an access right, the requested access information for the requested resources is distributed to the access information relay device 120. Otherwise, that is, when there is no access right, the distribution request is refused. Here, the resources include the device itself, a reader/writer of a recording medium of the device, and information stored by the device.

Further, the access information of resources available on the network is centrally managed by one functional unit. For example, an access right for each resource is managed by the access information relay device 120. Further, the access information relay device 120 may include a module, for example, a subscriber identification module (SIM), wherein information for identifying a subscriber is stored, so that the management is carried out by the module.

By arranging as described above, safe access control is realized using the identity of the owner and one of the access information relay device 120 and the module provided in the access information relay device 120 for storing the information for identifying the subscriber. That is, the access control is carried out based on one of the access information relay device 120 and the module always being possessed by the owner.

The storage unit 114 stores at least one of the information for accessing the resources available on the network and the information that indicates permission or denial of access to each of the resources. For example, as shown in Fig. 1, access rights to each of the resources, that is, permission to access by various access information relay devices, access information for each of the resources, etc. are stored.

According to an example shown in Fig. 1, access information relay devices 121 and 122 are permitted to access a file A of the resource managing device 150, the address and access key of which are 205.214.12.5, and "huidjf89", respectively. Further, access information relay devices 120 and 123 are permitted to access a service B of the resource managing device 160, the address, the port number, and the access key of which are 205.214.12.33, 5003, and "uhowiru", respectively. Further, access information relay devices 124 and 125 are permitted to access the resource managing device 170, the address and the access key of which are 200.168.22.22, and "wd53hjo4", respectively.

The access information generating unit 116 is for generating the access information that consists of the information for accessing the resources and a download key for downloading the resources. Here, the information for accessing the resources includes an IP address, a port number, etc. (if the resources are a device), and a reader/writer of a storage medium of the device; and an IP address of a device that stores the resources, and a contents ID for specifying the resources, if the resources are information that is stored. Further, the download key for downloading the resources is for canceling (decrypting) the secrecy of the resources; when security information such as a password is required for transmitting and receiving information, for example, the security information serves as the download key.

The updating unit 118 is for updating the access information of the resources stored by the storage unit 114 based on the latest resources access information transmitted by the resource managing devices. By providing the updating unit 118, access to resources that are obsolete can be decreased, i.e., useless access traffic can be reduced.

The accounting unit 119 is for performing an accounting process based on, for example, the access information relay device 120. Further, the accounting process may be performed based on information for identifying a subscriber, the information being stored in the module, for example, SIM, (Subscriber Identity Module) provided in the access information relay device 120.

The access information managing device 110, having the accounting unit 119, centrally provides the charging functions, which are until now provided by devices that distribute payable contents. Further, according to this embodiment, user's accounting information, for example, a credit card number, which is until now registered in two or more resource managing devices, is registered only in one access information managing device, reducing required storage space for storing the accounting information.

Next, the access information relay device 120 is described with reference to Fig. 3.

The access information relay device 120 includes an access control unit 122 for acquiring access information, an input unit 124 connected to the access control unit 122, and a communicating unit 126.

The access control unit 122 controls access to the access information managing device 110 and the network device 130. Further, the access control unit 122 accesses the access information managing device 110, and acquires the access information that consists of the information for accessing resources and the download key for downloading the resources. The input unit 124 is for selecting the resources to be requested from the access information of the resources. The communicating unit 126 that utilizes, for example, short distance radio communications, is for communicating with the network device 130. For example, the access information of the requested resources is provided to the network device 130.

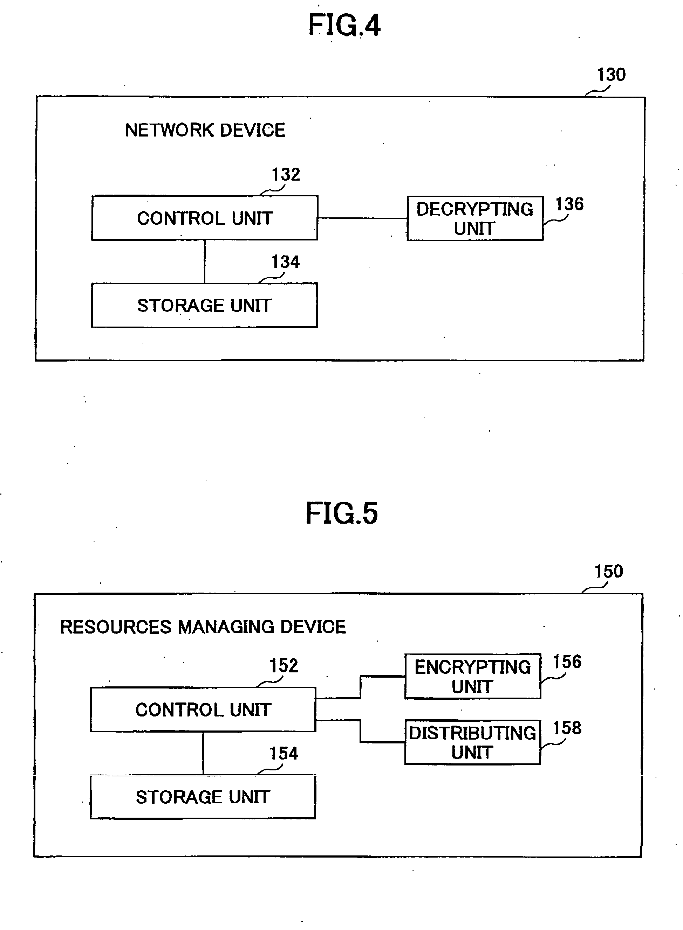

Next, the network device 130 is described with reference to Fig. 4.

The network device 130 includes a control unit 132, a storage unit 134, and a decrypting unit 136, the last two items being connected to the control unit 132.

The control unit 132 is for controlling accesses to the access information relay device 120 and the resource managing devices 150, 160, and 170. The storage unit 134 is for storing the access information transmitted by the access information managing device 110. The decrypting unit 136 is for decrypting information that is encrypted and transmitted by the resource managing devices 150, 160, and 170 using the key stored in the storage unit 134.

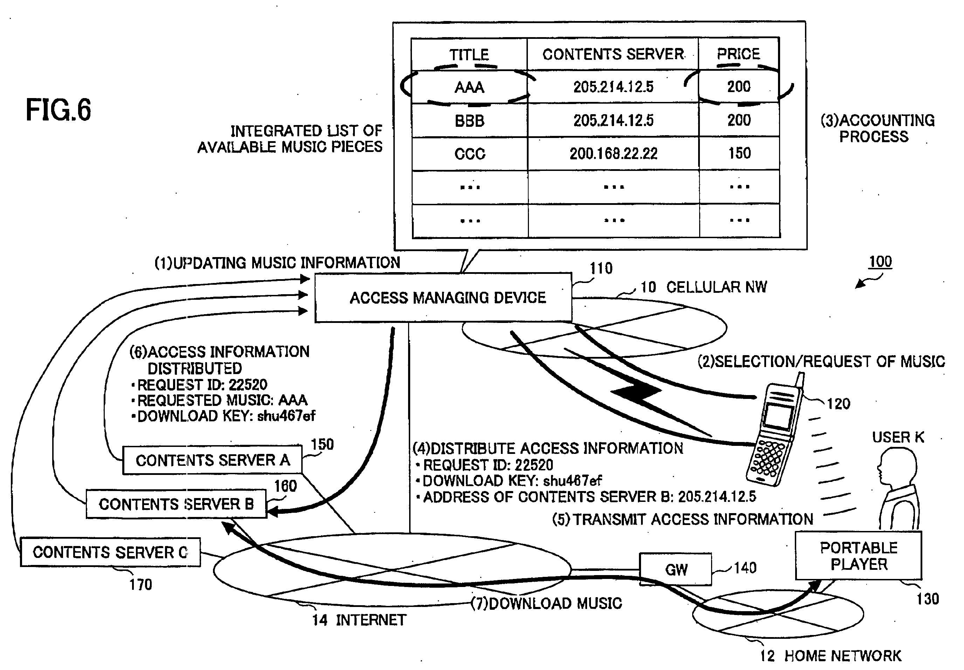

Next, the resource managing device 150 is described with reference to Fig. 5. The configurations of the resource managing devices 160 and 170 are the same as the resource managing device 150; accordingly, descriptions are not repeated.

The resource managing device 150 includes a control unit 152, a storage unit 154, an encrypting unit 156, and a distributing unit 158, the last three items being connected to the control unit 152.

The control unit 152 is for controlling accesses to the access information managing device 110 and the network device 130. The storage unit 154 is for storing resources (contents). The encrypting unit 158 is for encrypting requested contents using the download key contained in the access information transmitted by the access information managing device 110. The distributing unit 158 is for distributing the encrypted information to the network device 130.

Next, an example of operations of the access control system 100 according to the first embodiment is described with reference to Fig. 6.

In this example, content servers A, B, and C that manage contents of content providers A, B, and C, respectively, constitute the resource managing devices 150, 160, and 170, respectively; a mobile station 120 constitutes the access information relay device 120; and a portable player 130 constitutes the network device 130. Further, in this example, the access information managing device 110 manages information of music pieces stored in the content servers A, B, and C.

First, the content servers A, B, and C, (150, 160, and 170, respectively) of the content providers access the access information managing device 110, and update music information, i.e., a list of music pieces stored in the storage unit 154, as required through the communication network 14, for example, the Internet ((1) updating music information).

Next, the updating unit 118 of the access information managing device 110 updates the music information stored by the storage unit 114 based on the music information that is transmitted. Consequently, the access information managing device has the music information that is an integrated list of available music pieces as shown in Fig. 6.

As described, the resource managing devices 150, 160, and 170 communicate with the access information managing device 110, and provide and update the resources access information of the respective resource managing devices when some contents are newly added or some are deleted. In this way, accesses for missing contents are eliminated, and accordingly, useless traffic for accessing obsolete resources is reduced.

Next, User K accesses the access information managing device 110 using the cellular mobile station 120, then chooses and requests to purchase a music piece from the list of music pieces stored in the access information managing devices 110 ((2) selection/request of music).

Here, if there is no access right to the requested resources present in one of the mobile stations 120 that requests the music and the module of the mobile station 120 wherein the information for recognizing the subscriber is stored, an access right may be granted by performing the accounting process (charging process) for another one of the mobile stations 120 and the module of the other mobile station 120 wherein the information for recognizing the subscriber that requests the music pieces is stored.

Here, an example is described, wherein a music piece "AAA" of the content server B 160 (IP address: 205.214.12.5) is selected.

The accounting unit 119 of the access information managing device 110 performs the accounting process for User K according to the selected music piece (3) accounting process). In this example, the price of the music piece "AAA", which is 200 yen, is charged.

The accounting unit 119 can perform the accounting process, for example, for the owner of the mobile station 120, based on the information for recognizing the subscriber stored in the module such as SIM (Subscriber Identity Module) provided in the mobile station 120.

Next, the access information generating unit 116 of the access information managing device 110 issues a request ID as a request identifier indicating the information for accessing, a onetime password, and the download key serving as a one time symmetric key. Further, the access information generating unit 116 transmits to the mobile station 120 the request ID and the download key as the access information with the IP address of the content server B 160 of the content provider B ((4) distribution of access information).

Here, the access information managing device 110 may include an interface for directly connecting to the cellular system for at least one of when receiving the access information distribution request and when sending the access information. In this way, distribution of the access information without its being intercepted can be attained.

The communicating unit 126 of the mobile station 120 receives the access information, and provides the received access information to the portable player 130. For example, User K operates the mobile station 120 and provides the access information to the portable player 130 using an infrared interface. By performing the communications between the mobile station 120 and the portable player (network device) 130 using short distance radio communications, wiring is dispensed with, and the access information can be promptly provided. Since the access information is subject to change after being received, the ability of promptly providing the access information reduces the probability of the access information being obsolete, and reduces useless traffic on the network. The portable player 130 stores the received access information in the storage unit 134.

On the other hand, the access information generating unit 116 of the access information managing device 110 provides the generated request ID, the download key, and the title of the music selected by User K to the content server B 160 of the content provider B ((6) distributed access information). The content server B 160 receives and stores the request ID, the download key, and the title of the music selected by User K in the storage unit 154.

Next, User K operates the portable player 130, accesses the content server B 160 through the gateway GW 140, and downloads the music piece "AAA" ((7) download of music piece).

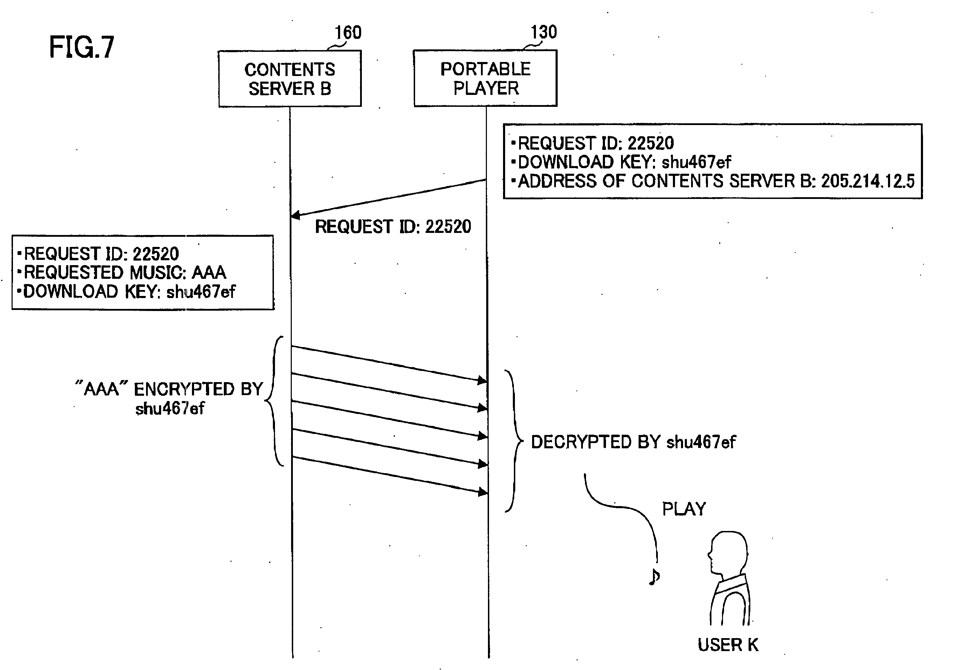

Next, a download process of downloading a music piece is described with reference to Fig. 7.

First, the control unit 132 of the portable player 130 transmits the request ID to the content server B 160. Here, "22520" is transmitted as the request ID, for example.

When the request ID is received by the content server B 160, the encrypting unit 156 encrypts the music piece "AAA" corresponding to the request ID by the download key, which is "shu467ef" here, and provides the encrypted music piece to the distributing unit 158. The distributing unit 158 transmits the encrypted music piece "AAA" to the portable player 130.

The portable player 130 receives the encrypted music piece "AAA", then the decrypting unit 136 decrypts the encrypted music piece "AAA" using the download key stored in the storage unit 134.

As described above, the resource managing device distributes resources based on the access information provided by the access information managing device; accordingly, distribution of the resources is performed so that replay attacks are blocked.

Although the access information is transmitted between the access information managing device, the access information relay device, and the network device, since the file size of the access information is sufficiently small as compared with the resources, the influence on acquisition time of the contents for the network device is small.

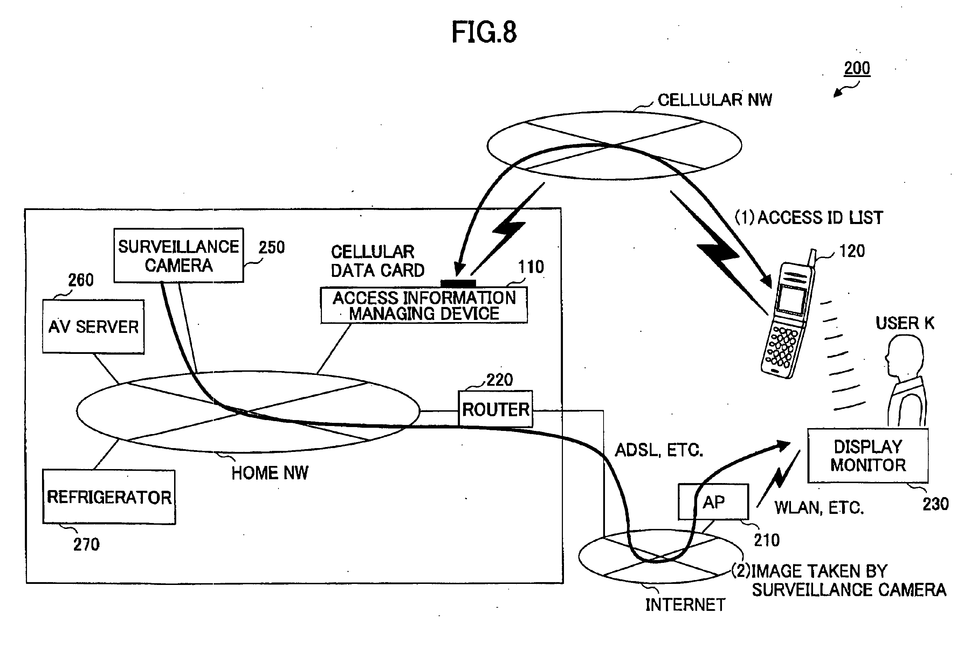

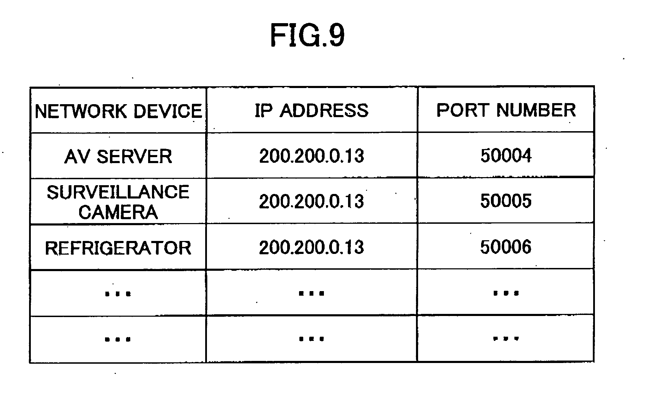

Next, another example of operations according to the first embodiment of the present invention is described with reference to Fig. 8 and Fig. 9, wherein an access control system 200 is used.

Here, each of the resource managing devices 150, 160, and 170 is constituted by, e.g., a video camera 250, an AV server 260, and a refrigerator 170; the access information relay device 120 is constituted by a mobile station; and the network device 130 is constituted by a display monitor 230. In this case, the access information managing device 110 stores and manages IP addresses and port numbers of the video camera 250, the AV server 260, and the refrigerator 270 in an address ID list as shown in Fig. 9.

According to this example, a user monitors an image taken by the video camera installed in the user's premises.

The user has an Internet connectivity contract with an Internet service provider (ISP), and a global IP is given to a router 220 installed in the premises. Further, the router 220 assigns a unique port number to the network devices, namely, the video camera 250, the AV server 260, and the refrigerator 270 connected to the home network (Home NW). Accordingly, when accessing the network device of the home network from the exterior, the router 220 specifies the global IP address given by the ISP and the port number of a desired network device.

First, the user originates a call to the access information managing device 110 of the premises from the mobile station 120 through a communication network, for example, Cellular NW, (the telephone number shall be known beforehand), and the access ID list stored in the storage unit 114 is requested ((1) access ID list).

The access control unit 112 of the access information managing device 110 responds to the request transmitted by the mobile station 120 with an access ID list of home electronics, such as the video camera 250, the AV server 260, and a refrigerator 270 of the home network.

Here, the access information managing device 110 may include an interface for directly connecting to the cellular system for at least one of when receiving the access information distribution request and when sending the access information. By structuring in this way, the access information distribution request is protected from being intercepted.

Next, if the user chooses, e.g., the video camera 250 from the access ID list by operating the input unit 124 of the mobile station 120, the access ID of the video camera 250 is provided to the display monitor 230 through the communicating unit 126, for example, an infrared interface.

Next, using the access ID transmitted to the display monitor 230, the user accesses the video camera 250 from the display monitor 230, and monitors an image taken by the video camera 250.

Although the case wherein the access information managing device 110 is independently provided is described above, the access information relay device 120 may include the function of the access information managing device. For example, a cellular data card can be used by the mobile station for this purpose.

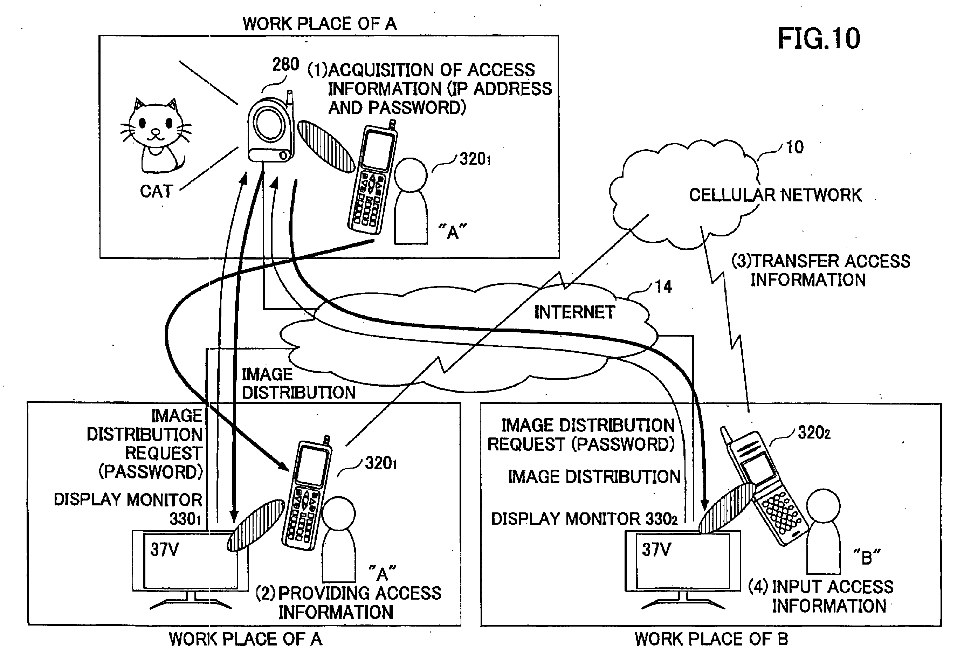

Next, the access control system according to the second embodiment of the present invention is described with reference to Fig. 10.

Here, an example is described, wherein a network camera 280 constitutes the resource managing device 150, mobile stations 320 (320₁ and 320₂) equipped with corresponding non-contact IC cards (not shown), e.g., FeliCa, constitute the access information relay device 120, and display monitors 330 (330₁ and 330₂) constitute the network device 130.

The example shown in Fig. 10 includes A's home, A's work place, and B's work place, being connected to a network, such as the Internet 14. (Here, A and B are individuals.) A network camera 280, which is provided in A's home, can be remotely controlled by a control command. The network camera 280 distributes an image according to a request from the outside, if the request is made with a correct password.

Further, the display monitor 330₁ is installed at A's work place. The display monitor 330₁ is capable of receiving an image through the network. In this case, the display monitor 330₁ gives an image distribution request to the network camera 280.

Further, the display monitor 330₂ is installed at B's work place. B is a good friend of A.

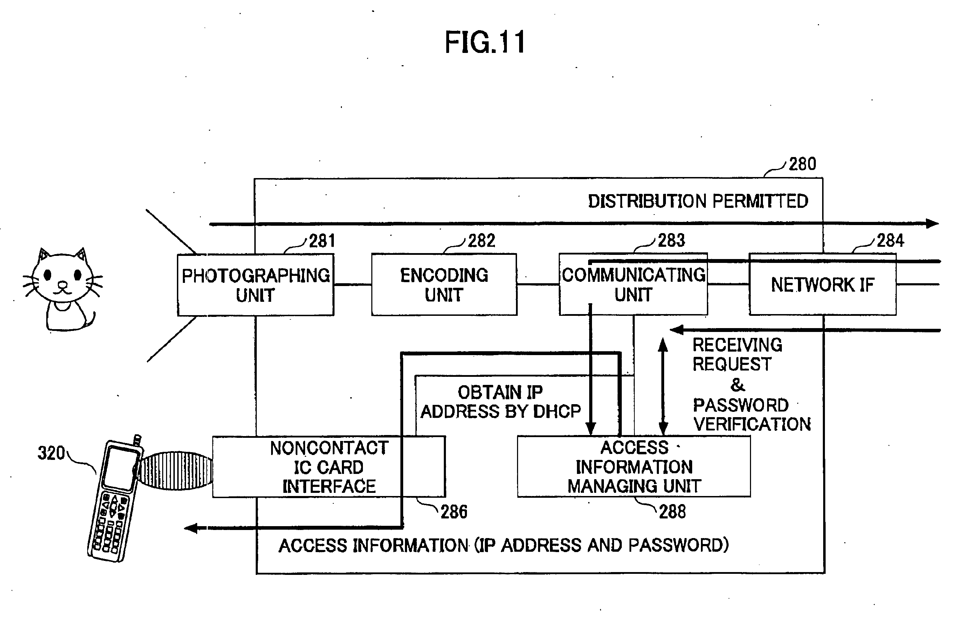

The network camera 280 is described with reference to Fig. 11.

The network camera 280 includes a photographing unit 281, an encoding unit 282 connected to the photographing unit 281, a communicating unit 283 connected to the encoding unit 282, a network IF 284 connected to the communicating unit 283, an access information managing unit 288, and a noncontact IC card interface 286.

The photographing unit 281 takes an image of an object, the image being one of still and moving, and provides the image to the encoding unit 282. The encoding unit 282 encodes the image, and provides the encoded image to the communicating unit 283.

When a distribution request for the image is received, the communicating unit 283 transmits the image to the requesting party based on a result of a password verification process performed by the access information managing unit 288 that is described below.

The access information managing unit 288 has a DHCP (dynamic host configuration protocol) client function, and acquires and stores the IP address of the network camera 280. Further, the access information managing unit 288 stores the password for authentication, verifies the password transmitted by the display monitor 330, and indicates the correctness of the password to the communicating unit 283.

The noncontact IC card interface 286 includes a card interface, e.g., a FeliCa interface, and transmits the password and the IP address of the network camera 280 stored in the access information managing unit 288 to an external device, for example, the mobile station 320.

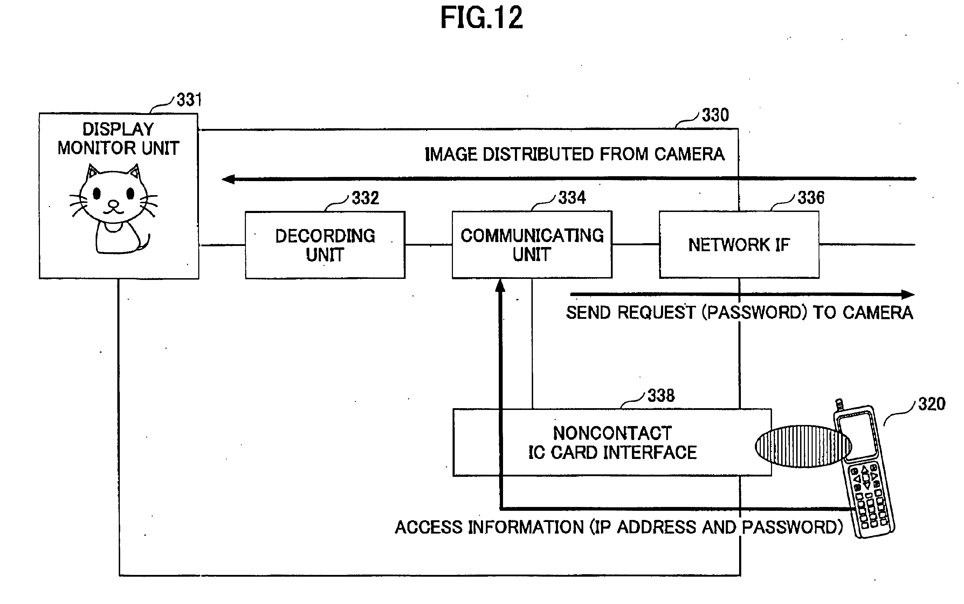

Next, the display monitor 330 of the second embodiment is described with reference to Fig. 12.

The display monitor 330 includes a display monitor unit 331, a decoding unit 332 connected to the display monitor unit 331, a communicating unit 334 connected to the decoding unit 332, a network IF 336 connected to the communicating unit 334, and a noncontact 1C card interface 338.

The communicating unit 334 transmits the distribution request based on the access information (e.g., the IP address, and the password) provided by the noncontact IC card interface 338, for example, a FeliCa interface, to the network camera 280 through the network IF 336.

When the distribution request is accepted by the network camera 280 and image data are distributed, the communicating unit 334 receives the image data through the network IF 336, and provides the received image data to the decoding unit 332.

The decoding unit 332 decodes the image data (digital data), and the decoded data are provided to the display monitor unit 331. The display monitor unit 331 displays the decoded image data.

Next, an example of operations of the access control system according to the second embodiment is specifically described.

The individual A takes out his/her mobile station 320₁ as the access information relay device before going to office, and uses a noncontact IC card, for example, FeliCa, of the mobile station 320₁ and acquires the access information consisting of the IP address and the password of the network camera 280 ((1) acquisition of access information (IP address and password)).

For example, the access control unit 122 acquires the access information through the short distance radio communications function carried out by the communicating unit 126.

When the network camera 280 provides the access information, as long as the network camera 280 is installed in the premises of A, there is little chance of the access information leaking to (being intercepted by) an unspecified third person, even if A's identity is not examined. Nevertheless, A's identification may be authenticated for enhanced information security.

Then, at A's work place, the individual A provides the access information to the display monitor 330₁ installed in A's work place using the noncontact IC card interface of the mobile station 320₁ ((2) providing access information). For example, the access control unit 122 provides the access information using the communicating unit 126 by one of the short distance radio communications function and a one to one direct communication facility.

The display monitor 330₁ acquires the access information through the noncontact IC card interface 338. The communicating unit 334 accesses the network camera 280 according to the provided access information, and transmits a distribution request and the password.

The communicating unit 283 of the network camera 280 receives the distribution request and the password transmitted by the display monitor 330₁ through the network IF 284, and provides the same to the access information managing unit 288. The access information managing unit 288 verifies the password, and when the password is determined to be correct, the information indicating that the distribution is permitted is provided to the communicating unit 283. The communicating unit 283 carries out the distribution based on the information indicating that the requested distribution is permitted. The communicating unit 334 of the display monitor 330₁ receives the distributed data through the network IF 336, the decoding unit 332 decodes the same, and the decoded data are provided to the display monitor unit 331. As a result, the image taken by the network camera 280 is displayed on the display monitor unit 331.

In this way, the individual A can monitor situations of his/her premises, e.g., status of a cat, using the network camera 280 and the display monitor 330₁ without a special external input device.

Under situations as described above, the individual A ("A") opts to allow the individual B ("B") to access the network camera 280. "A" provides the access information to the access control unit 122 by operating the input unit 124 of the mobile station 320₁ using one of the short distance radio communications function and the one to one direct communication facility of the communicating unit 126. Then, "A" sends an E-mail, to which the access information is attached, from the mobile station 320₁ to the mobile station 320₂ of "B" ((3) transfer access information).

In this case, the E-mail is transmitted through the cellular network 10.

"B" receives the E-mail sent from "A", and uses the noncontact IC card of the mobile station 320₂, and the access information, for example, the IP address and the password, is provided to the noncontact IC card interface 338 of the display monitor 330₂ ((4) input access information).

The communicating unit 334 of the display monitor 330₂ accesses the network camera 280 according to the provided access information, and issues a transmission request. Then, as described above, verification of the password and the like are performed, and the image taken by the network camera 280 is displayed on the display monitor unit 331 of the display monitor 330₂.

In this way, both "A" and "B" can monitor the premises of "A", such as the status of the cat.

According to the second embodiment, no special input device for providing the access information is required of the network camera 280 and the display monitor 330. Further, since the access information is transmitted only by the short distance communication facility using the noncontact IC card, for example, a FeliCa, and the mobile station network, safe and easy resource sharing is realized with minimum probability of leaks to a third person.

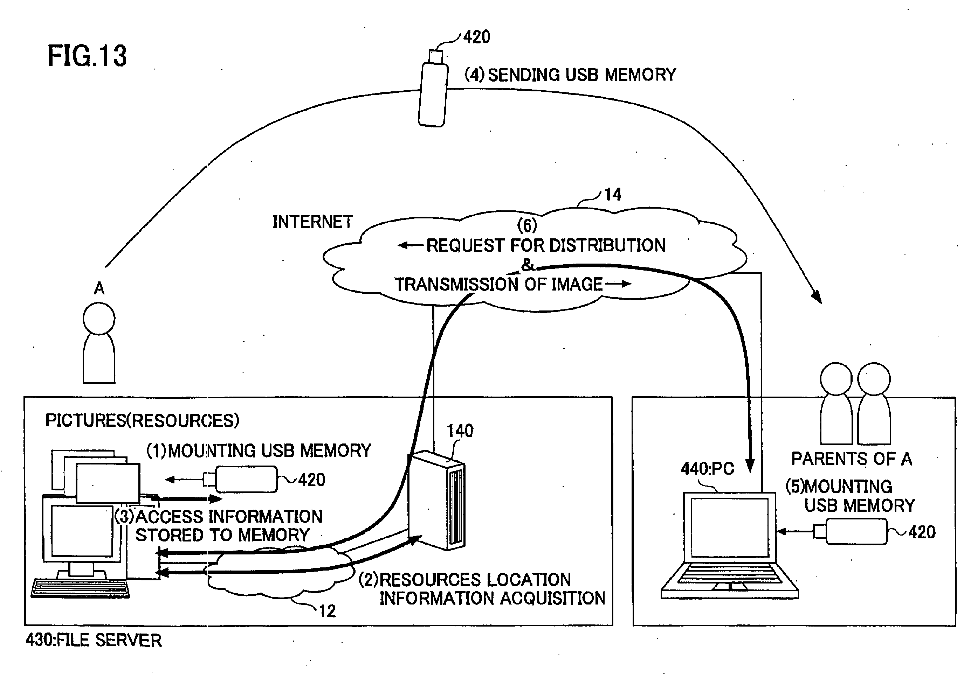

Next, the access control system according to the third embodiment of the present invention is described with reference to Fig. 13.

Here, an example is described, wherein a file server 430 constitutes the resource managing device, a recording medium 420, for example, a USB memory, constitutes the access information relay device, and a PC (Personal Computer) 440 constitutes the network device.

For example, the home network 12 is located at the premises of the individual "A",
wherein a broadband router having a DHCP/IP masquerade function serves as the gateway (GW).

The file server 430 of "A", the IP address of which is 192.168.0.212, is for sharing pictures with parents of "A" who live at a remote location. Further, the external IP address of the GW 140 is assumed to be 200.0.0.211. That is, the GW 140 transmits packets addressed to the port number 212 of the IP address to the file server 430.

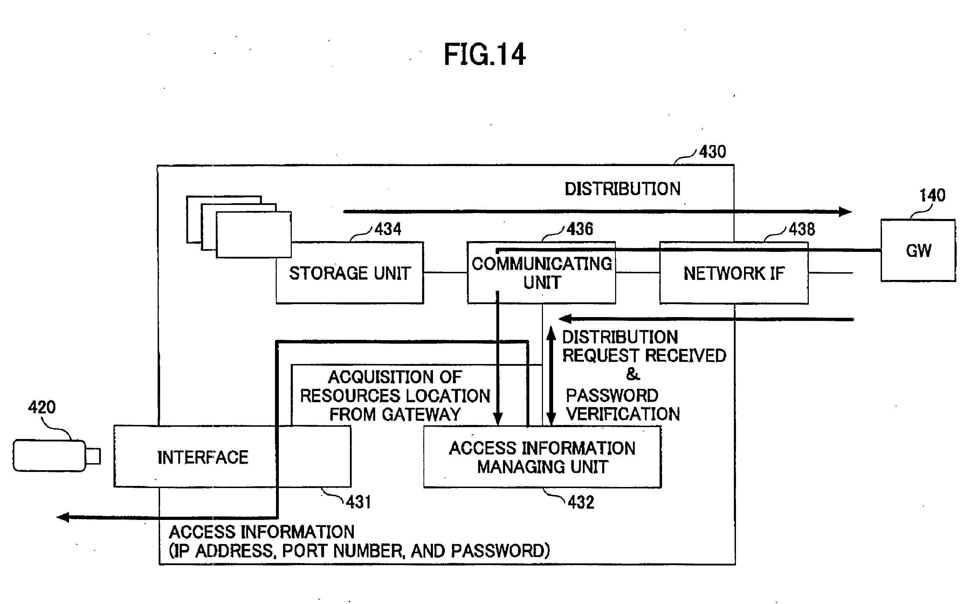

Next, the file server 430 is described with reference to Fig. 14.

The file server 430 includes an interface 431, an access information managing unit 432 and a communicating unit 436 connected to the interface 431, a storage unit 434, and a network IF 438, the last two items being connected to the communicating unit 436.

The storage unit 434 is for storing a file, for example, image data.

When a request for the image data is received, the communicating unit 436 provides the requested data to the requesting party based on a result of a verification process of the password performed by the access information managing unit 432 as described below.

The access information managing unit 432 communicates with the GW 140 through the network IF 438, acquires and stores the external IP address of the GW 140 (e.g., 200.0.0.211), and the port number (e.g., 212) assigned to the GW 140 as resources location information. Further, the access information managing unit 432 stores the key, for example, the password for canceling the secrecy of the resources, verifies the password transmitted by the PC 440, and notifies the communicating unit 436 of the correctness of the password.

The interface 431 constituted by, for example, a USB interface, transmits the IP address, the port number, and the password stored in the access information managing unit 432 to the USB memory 420 that has an access information relay function.

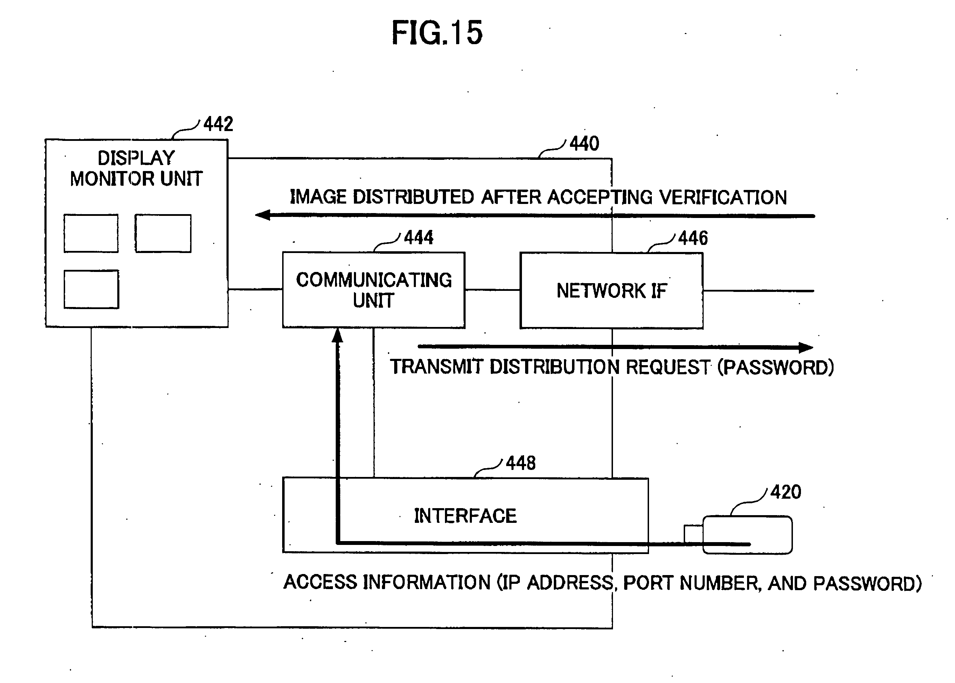

Next, the PC 440 is described with reference to Fig. 15.

The PC 440 includes a display monitor unit 442, a communicating unit 444 connected to the display monitor unit 442, a network IF 446, and an interface 448, the last two items being connected to the communicating unit 444.

The interface 448 constituted by, for example, the USB interface, acquires the access information (e.g., the IP address, the port number, and the password) from the USB memory 420 that has the access information relay function, and transmits the access information to the communicating unit 444.

The communicating unit 444 transmits the request for distribution of the image data to the file server 430 based on the access information provided by the USB memory 420.

When the request for distribution of the image data is received by the file server 430, and the image data are distributed, the communicating unit 444 receives the image data through the network IF 446, and provides the image data to the display monitor unit 442. The display monitor unit 442 displays the image on its monitoring screen based on the provided image data.

In summary, according to the embodiments of the present invention as described above, a cellular mobile station is used as the access information relay device (device) for acquiring the access information; accordingly, spoofing is prevented from occurring because the identity of the user of the cellular mobile station can be used; and safe access rights management is realized. Further, it is not necessary to use a private key of the mobile station.

Next, an example of specific operations of the access control system according to the third embodiment is described.

"A" has the file server 430, and mounts the USB memory 420 that has the access information relay function in the file server 430 ((1) mounting USB memory).

The access information managing unit 432 of the file server 430 detects the USB memory 420, then communicates with the GW 140 through the home network (private network) 12, and acquires the location information of the GW 140, which location information is held by the GW 140, through the network IF 438 and the communicating unit 436 ((2) resources location information acquisition). The location information acquired includes the IP address (e.g., 200.0.0.211), and an assigned port number (e.g., 212).

The access information managing unit 432 of the file server 430 stores the access information that includes the location information and a password, e.g., "cats", in the USB memory 420 through the interface 432 ((3) access information stored in memory).

Next, "A" sends the USB memory 420 to the parents who live in the remote place ((4) sending USB memory).

Next, the parents who receive the USB memory 420 insert the USB memory 420 into the PC 440 ((5) mounting USB memory).

The communicating unit 444 of the PC 440 acquires the access information through the interface 448, accesses the file server 430 through the network IF 446, and transmits the password and a request for distribution of the image data.

The communicating unit 436 of the file server 430 receives the password and the request for distribution of the image data through the network IF 438, and the access information managing unit 432 verifies the password. If the password is determined to be correct, the communicating unit 436 transmits the requested image data from the storage unit 434, ((6) request & transmission).

In this way, "A" and his/her parents do not have to bother with inputting the access information, and the like, by using an external input device, and can safely share the image data through the network.

Although the present embodiment describes the case where the file server 430 obtains the resources location information from the gateway GW 140, the structure may be such that the resources location information is obtained by communicating with a resource location solution server that is provided, e.g., external to the home network 12.

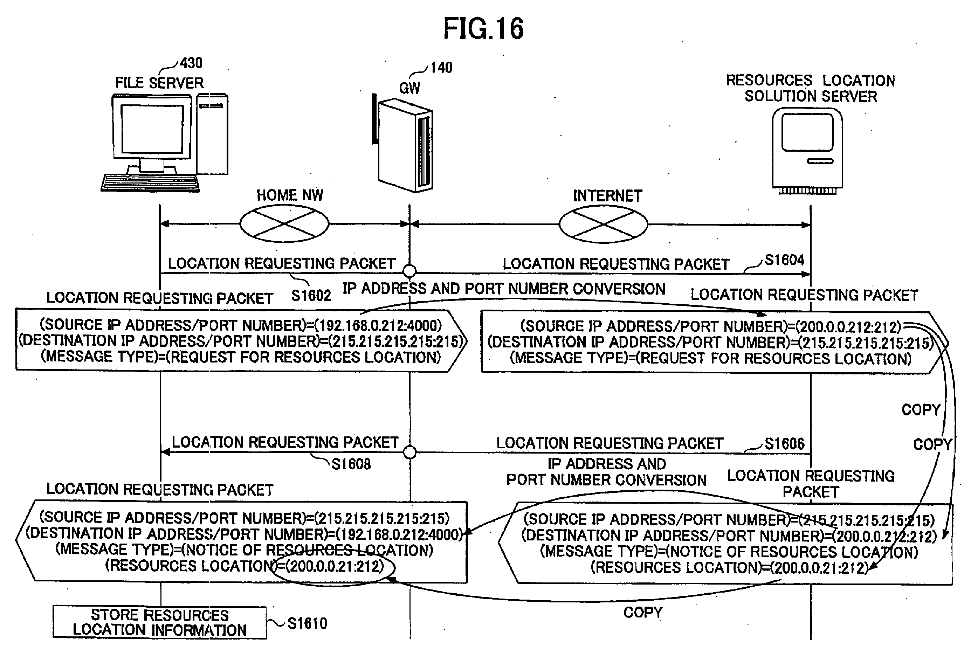

An example of operations when acquiring the resources location information from the resource location solution server is described with reference to Fig. 16.

The communicating unit 436 of the file server 430 transmits a location requesting packet to the resources location solution server (Step S1602). In this example, the communicating unit 436 transmits an IP address 215.215.215.215 and a port number 215 corresponding to the resources location solution server.

That is, the communicating unit 436 transmits the location requesting packet, the source of which is 192.168.0.212 at a port #4000, the destination of which is 215.215.215.215 at the port #215, and the message type of which is a request for resources location.

The location requesting packet transmitted by the file server 430 is received by the GW 140, the GW 140 converts the source IP address and port number into the external address and port number of the GW 140, namely, 200.0.0.212 and #212, respectively, and sends them to the resources location solution server (Step S1604).

That is, the GW 140 transmits the packet requesting the resources location with the source address and port number of 200.0.0.212 and #212, and the destination address and port number of 215.215.215.215 and #215, respectively, the message type being a request for the resources location.

The resources location solution server receives the packet requesting the resources location, and transmits a packet of the requested resources location to the source (Step S1606). For example, the resources location solution server sets the source IP address and port number as the destination IP address and destination port of a responding packet, and as the IP address and the port number of the resources location that are loaded in a data section of the responding packet.

That is, the resources location solution server transmits the responding packet containing the resources location 200.0.0.212 and #212 with the response source address of 215.215.215.215 and #215, and the response destination (original source) address of 200.0.0.212 and #212. Here, the message type is a notice of resources location.

The packet containing the resources location transmitted by the resources location solution server is received by the GW 140, the GW 140 converts the destination IP address and port number into those of the file server 430, i.e., 192.168.0.212 and #4000, and transmits the converted packet to the file server 430 (Step S1608).

That is, the GW 140 transmits the packet containing the resources location 200.0.0.212 and #212 with the source address and port number of 215.215.215.215 and #215, and the destination's address and port number of 192.168.0.212 and #4000, where the message type is a notice of resources location.

The file server 430 receives the packet and acquires the resources location information from the data section of the packet.

The file server 430 stores the resources location information (Step S1610).

Further, the access information is provided to the network device from outside by the access information relay device (device) and the network device; accordingly, the network device for accessing the resources can be miniaturized.

### [Availability to industry]

The access information relay device, the network device, the access information managing device, the resource managing device, and the access control system according to the present invention are applicable to a system for managing a right to access resources using a cellular mobile station.

Further, the present invention is not limited to these embodiments, but variations and modifications may be made without departing from the scope of the present invention.

## Claims

1. An access information relay device 120, **characterized by**:
an access information acquiring unit 122 for acquiring access information that consists of information for accessing resources, and a key for downloading the resources; and
a communicating unit 126 for providing the access information to at least one of another access information relay device and an accessing party.

2. The access information relay device as claimed in claim 1, **characterized in that**
the access information acquiring unit acquires resources location information that indicates a location of the resources as the access information.

3. The access information relay device as claimed in any one of claims 1 and 2, **characterized in that**
the access information acquiring unit acquires the access information by short distance radio communications.

4. The access information relay device as claimed in any one of claims 1 through 3, **characterized in that**
the communicating unit transmits the access information to at least one of another access information relay device and the accessing party by short distance radio communications.

5. A network device 130, **characterized by**:
a storage unit 134 for storing access information that consists of information for accessing resources, and a key for downloading the resources;
an access unit 132 for accessing the resources based on the access information; and
a decrypting unit 136 for decrypting the resources with the key.

6. The network device as claimed in claim 5, **characterized by**:
a receiving unit for receiving the access information from the access information relay device.

7. The network device as claimed in claim 6, **characterized in that**
the receiving unit receives resources location information that indicates a location of the resources as the access information.

8. An access information managing device 110, **characterized by**:
a storage unit 114 for storing at least one of information for accessing resources and information that indicates whether an access to the resources is permitted;
an access information generating unit 116 for generating the access information that consists of the information for accessing requested resources and a key for downloading the resources according to a request for the information for accessing the resources; and
a transmitting unit for transmitting the access information generated by the access information generating unit.

9. The access information managing device as claimed in claim 8, further **characterized by**:
an access rights determining unit 112 for determining whether an access to the requested resources should be permitted based on one of
an access information relay device 120, and
a module of the access information relay device wherein information for identifying a subscriber to be billed is stored; **characterized in that**
the access information generating unit generates the access information based on the determination of the access rights determining unit.

10. The access information managing device as claimed in any one of claims 8 and 9, further **characterized by**:
an accounting unit 119 for accounting for a charge for the access information to one of the access information relay device, and the module of the access information relay device wherein information for identifying a subscriber to be billed is stored.

11. The access information managing device as claimed in claim 10, **characterized in that**
the accounting unit charges based on the request for the access rights, when the access information relay device and a module of the access information relay device, wherein information for identifying a subscriber to be billed is stored, does not have the access rights for the requested resources, and
the access information generating unit generates the access information based on the accounting.

12. The access information managing device as claimed in any one of claims 8 through 11, further **characterized by**:
an interface unit for directly connecting to the access information relay device.

13. The access information managing device as claimed in any one of claims 8 through 12, **characterized in that**
the transmitting unit transmits the generated access information to a resource managing device that manages the resources.

14. The access information managing device as claimed in any one of claims 8 through 13, further **characterized by**:
an updating unit 118 for updating at least one of the information for accessing resources and the information that indicates whether an access to the resources is permitted with the received access information.

15. A resource managing device 150, **characterized by**:
a storage unit 154 for storing resources;
an encrypting unit 156 for encrypting the resources based on access information that is provided; and
a distributing unit 158 for distributing the encrypted resources.

16. The resource managing device as claimed in claim 15, **characterized in that**
the distributing unit provides information for accessing the resources to an access information managing device.

17. The resource managing device as claimed in any one of claims 15 through 16, **characterized by**:
a storage unit for storing the information for accessing the resources;
an access information notifying unit for providing the information for accessing the resources to the access information relay device.

18. The resource managing device as claimed in claim 17, **characterized in that**
the access information notifying unit provides resources location information that indicates a location of the resources to the access information relay device.

19. An access control system **characterized by**:
a storage unit for storing at least one of information for accessing resources and information that indicates whether an access to the resources is permitted;
an access information generating unit for generating access information that consists of the information for accessing resources that are requested, and a key for downloading the resources according to a distribution request of the information for accessing resources;
a communicating unit for transmitting the access information to an accessing party;
the accessing party being **characterized by**:
a storage unit for storing the access information that is received;
an access unit for accessing the resources based on the access information;
a decrypting unit for decrypting the resources with the key; and
a resource managing device for managing the resources being **characterized by**:
a storage unit for storing the resources;
an encrypting unit for encrypting the resources based on the access information provided by an access information managing device; and
a distributing unit for distributing the encrypted resources.
